# EUROPEAN PATENT APPLICATION

(11) **EP 4 459 205 A1**
(43) Date of publication of application: **06.11.2024**
(21) Application number: 21969429.6
(22) Date of filing: 29.12.2021
(51) Int. Cl.: F25D 11/02

(54) **STORAGE APPARATUS, STORAGE METHOD AND DEVICE THEREOF AND STORAGE CABINET**

(71) Applicant: Hefei Midea Refrigerator Co., Ltd., Hefei, Anhui 230088 (CN); Hefei Hualing Co., Ltd., Hefei, Anhui 230601 (CN); Midea Group Co., Ltd., Foshan, Guangdong 528311 (CN)
(72) Inventor: ZHOU, Weihong, Hefei, Anhui 230601 (CN); LIU, Xiaohui, Hefei, Anhui 230601 (CN)
(74) Representative: RGTH
(86) International application number: PCT/CN2021/142509
(87) International publication number: WO 2023/123060

(57) **Abstract**

The present application relates to the technical field of food storage, in particular to a storage apparatus, a storage method and device thereof and a storage cabinet. The storage apparatus comprises a storage unit having a storage space; a gas supply part, being in fluid communication with the storage space so as to adjust gas parameters in the storage space; and an operation member, adapted to drive the storage unit to operate on the basis of the gas parameters in the storage space so as to realize fluid communication between the storage space and the outside. The storage apparatus can adjust the gas concentration in the storage space, thus matching storage conditions for different food and realizing pressure relief of the storage space. When the storage apparatus is applied to the field of food alive-keeping storage, the alive period of food can be prolonged by adjusting the gas concentration and the gas pressure in the storage space.

## Description

### FIELD

The present application relates to the field of food storage, and in particular, to a storage device, a storage method for the storage device, a storage apparatus for the storage device, and a storage cabinet.

### BACKGROUND

In the related art, a plurality of control parameters need to be controlled for a storage device to store fresh ingredients for a long time. For storage devices such as refrigerators and freezers, a preservation period of fresh ingredients cannot be prolonged, and a reliability is poor.

### BRIEF SUMMARY

The present application aims to solve at least one of the problems in the related art. The present application provides a storage device that may preserve fresh ingredients for a long time and improve the reliability of preservation.

The present application further provides a storage cabinet.

The present application further provides a storage method.

The present application further provides a storage apparatus.

The present application further provides an electronic device.

The present application further provides a non-transitory computer-readable storage medium.

The present application further provides a computer program product.

An embodiment of the present application provides a storage device, comprising:
a storage member, having a storage space;
a gas supply member, being in fluid communication with the storage space to adjust a parameter of gas in the storage space; and
a drive member, suitable for driving the storage member to operate based on the parameter of gas in the storage space, to provide fluid communication between the storage space and an outside.

In the storage device of the embodiment of the present application, ingredients may be placed in the storage member by providing the storage space inside the storage member; the parameter of gas in the storage space may be adjusted by providing the gas supply member at the storage member, and storage conditions of different ingredients for the parameter of gas may be matched by adjusting the parameter of gas. When at least one of a pressure of gas and a concentration of gas in the storage space does not meet a storage requirement, the drive member may drive the storage member to operate to provide fluid communication between the storage space and the outside by providing the drive member, which timely adjusts at least one of the pressure of gas and the concentration of gas in the storage space, and also relieves pressure of the storage space. When being applied to the field of ingredient preservation, the storage device may prolong a preservation period of ingredients by adjusting the pressure of gas and the concentration of gas in the storage space.

According to an embodiment of the present application, the storage device further comprises a cover body, covered on the storage member to seal the storage space, and the drive member is mounted at the cover body.

According to an embodiment of the present application, the gas supply member comprises:
a mount housing, mounted at the cover body;
a first water box, mounted at the mount housing and communicating with the storage space through a pipeline; and
a gas production member, provided at the first water box.

According to an embodiment of the present application, the gas supply member further comprises a seal cover movably mounted at the first water box, and a first seal is provided between the seal cover and the first water box.

According to an embodiment of the present application, the first water box is provided with an exhaust port, the storage member is provided with an air inlet, and two ends of the pipeline are respectively connected to the exhaust port and the air inlet.

According to an embodiment of the present application, the gas supply member comprises:
an electrolytic chamber, mounted at the cover body and being in fluid communication with the storage space; and
an electrolytic member, mounted at the electrolytic chamber.

According to an embodiment of the present application, the drive member comprises:
a mount seat, mounted at the cover body; and
a push rod, where a first end of the push rod is stretchably mounted at the mount seat, and a second end of the push rod is suitable for driving the storage member to operate.

According to an embodiment of the present application, the storage device further comprises a first detection member, suitable for detecting the parameter of gas, where at least one of the storage member and the cover body is mounted with the first detection member, and the push rod is suitable for operating based on a first detection signal of the first detection member.

According to an embodiment of the present application, the storage device further comprises a humidity control apparatus, where the humidity control apparatus comprises:
a second water box, mounted at the cover body and provided with a through hole communicating with the storage space; and
an atomization member, mounted at the through hole.

According to an embodiment of the present application, the storage device further comprises a second detection member suitable for detecting humidity of air in the storage space, where at least one of the storage member and the cover body is mounted with the second detection member, and the atomization member starts and stops based on a second detection signal of the second detection member.

According to an embodiment of the present application, the cover body is provided with a control panel, and the control panel is electrically connected to at least one of the gas supply member and the drive member.

According to an embodiment of the present application, the storage device further comprises an exhaust valve, where the exhaust valve is mounted at the storage member and is suitable for communicating the storage space with the outside or separating the storage space from the outside.

According to an embodiment of the present application, the storage member is switchable between a push-back position and a pull-out position relative to a mount position of the storage member;
the storage device further comprises:
an exhaust valve, mounted at one of the storage member and the mount position; and
a match member, mounted at another one of the storage member and mount position;
the match member corresponds to the exhaust valve and is suitable for driving the exhaust valve to operate the exhaust valve to communicate the storage space with the outside in the push-back position; and the match member separates from the exhaust valve in the pull-out position.

An embodiment of the present application provides a storage cabinet, comprising a cabinet body, where the cabinet body is provided with the storage device described above inside.

According to the storage cabinet provided in the embodiment of the present application, not only the preservation period of aquatic ingredients may be prolonged but also the automation level of the storage cabinet may be improved by providing the above-mentioned storage device inside the cabinet.

According to an embodiment of the present application, a refrigeration compartment is provided inside the cabinet body, and the storage device is provided in the refrigeration compartment in a drawable manner.

An embodiment of the present application provides a storage method based on the storage device described above, comprising:
obtaining an actual parameter of gas in the storage space; and
adjusting an operation state of at least one of the gas supply member and the drive member in response to a comparison result between the actual parameter of gas and a given parameter of gas.

According to the storage method provided in the embodiment of the present application, by obtaining the actual parameter of gas in the storage space, and adjusting at least one operation of the gas supply member and the drive member based on the comparison result between the actual parameter of gas and the given parameter of gas, the parameter such as the concentration of gas or the pressure of gas in the storage space may be adjusted timely. As such, the storage parameter in the storage space may be adjusted timely. When the storage device is applied to the field of preservation, it may create a storage environment conducive to the preservation of aquatic ingredients in the storage space, which avoids the situation of aquatic mortality caused by high concentration of gas and high pressure of gas during the preservation process of aquatic ingredients, and extends the preservation period of aquatic ingredients.

According to an embodiment of the present application, the actual parameter of gas comprises an actual pressure of gas, and the given parameter of gas comprises a given pressure of gas;
adjusting the operation state of at least one of the gas supply member and the drive member in response to the comparison result between the actual parameter of gas and the given parameter of gas comprises:
controlling the drive member to operate to communicate the storage space with the outside in accordance with a determination that the actual pressure of gas is greater than the given pressure of gas.

According to an embodiment of the present application, after controlling the drive member to operate to communicate the storage space with the outside in accordance with the determination that the actual pressure of gas is greater than the given pressure of gas, the method comprises:
controlling the drive member to reset in accordance with a determination that the actual pressure of gas reaches the given pressure of gas.

According to an embodiment of the present application, the actual parameter of gas comprises an actual concentration of oxygen, and the given parameter of gas comprises a given concentration of oxygen;
adjusting the operation state of at least one of the gas supply member and the drive member in response to the comparison result between the actual parameter of gas and the given parameter of gas comprises:
controlling the gas supply member to start and/or the drive member to operate to communicate the storage space with the outside in accordance with a determination that the actual concentration of oxygen is lower than the given concentration of oxygen.

According to an embodiment of the present application, the actual parameter of gas comprises actual humidity of air, the given parameter of gas comprises a given humidity of air, and the storage device comprises a humidity control apparatus;
the storage method further comprises:
controlling the humidity control apparatus to start in accordance with a determination that the actual humidity of air is lower than the given humidity of air.

An embodiment of the present application provides a storage apparatus based on the storage device described above, comprising:
an obtain module, used for obtaining an actual parameter of gas in the storage space; and
a control module, used for adjusting an operation state of at least one of the gas supply member and the drive member in response to a comparison result between the actual parameter of gas and a given parameter of gas.

An embodiment of the present application provides an electronic device, comprising a memory, a processor, and a computer program stored on the memory and capable of running on the processor, where the processor, when executing the program, performs the steps of the storage method of the storage device as described above.

An embodiment of the present application provides a non-transitory computer-readable storage medium on which a computer program is stored, where the computer program, when executed by a processor, performs the steps of the storage method of the storage device as described above.

An embodiment of the present application provides a computer program product, comprising a computer program, where the computer program, when executed by a processor, performs the storage method of the storage device as described above.

The above one or more solutions in the embodiments of the present application have at least one of the following technical effects.

In the storage device of the embodiment of the present application, ingredients may be placed in the storage member by providing the storage space inside the storage member; the parameter of gas in the storage space may be adjusted by providing the gas supply member at the storage member, and storage conditions of different ingredients for the parameter of gas may be matched by adjusting the parameter of gas. When at least one of a pressure of gas and a concentration of gas in the storage space does not meet a storage requirement, the drive member may drive the storage member to operate to provide fluid communication between the storage space and the outside by providing the drive member, which timely adjusts at least one of the pressure of gas and the concentration of gas in the storage space, and also relieves pressure of the storage space. When being applied to the field of ingredient preservation, the storage device may prolong a preservation period of ingredients by adjusting the pressure of gas and the concentration of gas in the storage space.

According to the storage cabinet provided in the embodiment of the present application, not only the preservation period of aquatic ingredients may be prolonged but also the automation level of the storage cabinet may be improved by providing the above-mentioned storage device inside the cabinet.

In the storage method provided in the embodiment of the present application, by obtaining the actual parameter of gas in the storage space, and adjusting at least one operation of the gas supply member and the drive member based on the comparison result between the actual parameter of gas and the given parameter of gas, the parameter such as concentration of gas or the pressure of gas in the storage space may be adjusted timely. As such, the storage parameter of the storage space may be adjusted timely. When being applied to the field of preservation, the storage device may create a storage environment conducive to the preservation of aquatic ingredients in the storage space, which avoids a situation of aquatic mortality caused by high concentration of gas and high pressure of gas during the preservation of aquatic ingredients, and extends the preservation period of aquatic ingredients.

Additional aspects and advantages of the present application are set forth in part in the description which follows and, in part, will be apparent from the description, or may be learned through practice of the present application.

### BRIEF DESCRIPTION OF THE DRAWINGS

To provide a clearer explanation of the solutions in the embodiments or the related art of the present application, a brief introduction will be made to the drawings used in the embodiments or related descriptions. The drawings in the following description are only some embodiments of the present application. For those skilled in the art, other drawings may be obtained based on these drawings without creative labor.
FIG. 1 is a schematic structural diagram of a storage device mounted at a storage cabinet according to an embodiment of the present application;
FIG. 2 is a first schematic structural diagram of a storage device according to an embodiment of the present application;
FIG. 3 is an exploded schematic diagram of a storage device according to an embodiment of the present application;
FIG. 4 is a cross-sectional schematic diagram of a storage device according to an embodiment of the present application;
FIG. 5 is a second schematic structural diagram of a storage device according to an embodiment of the present application;
FIG. 6 is a top schematic diagram of a storage device according to an embodiment of the present application;
FIG. 7 is a cross-sectional schematic diagram of FIG. 6 at direction A-A;
FIG. 8 is a partially enlarged diagram of FIG. 7 at location B;
FIG. 9 is a top schematic diagram of a storage cabinet according to an embodiment of the present application;
FIG. 10 is a cross-sectional schematic of FIG. 9 at direction C-C;
FIG. 11 is a partially enlarged diagram of FIG. 10 at point D;
FIG. 12 is a schematic flowchart of a storage method according to an embodiment of the present application;
FIG. 13 is a schematic structural diagram of a storage apparatus according to an embodiment of the present application; and
FIG. 14 embodiment of the present application.

### Reference signs:

300: storage member; 302: storage space; 304: humidity control apparatus; 306: gas supply member; 308: drive member; 310: cover body; 312: mount housing; 314: first water box; 316: seal cover; 318: first seal; 320: exhaust port; 322: air inlet; 324: pipeline; 325: gas production member; 326: mount seat; 328: push rod; 330: second water box; 332: atomization member; 334: control panel; 336: storage cabinet; 338: refrigeration compartment; 340: obtain module; 342: control module; 344: processor; 346: communication interface; 348: memory; 350: communication bus; 352: exhaust valve; 354: valve seat; 356: valve core; 358: exhaust passage; 360: first passage; 362: second passage; 364: valve cover; 366: adjustment member; 368: support; 370: second seal; 372: match member; 374: upper cover; 376: claw; 378: slot; 380: exhaust hole; 382: electrolytic chamber; 384: electrolytic member; 386: first detection member; 388: second detection member.

### DETAILED DESCRIPTION

The following implementations of the present application are described in further detail in conjunction with the drawings and embodiments. The following embodiments are used to illustrate the present application, but not to limit the scope of the present application.

In the description of the embodiments of the present application, it should be noted that the orientation or positional relationship indicated by terms such as "central", "longitudinal", "lateral", "up", "down", "front", "back", "left", "right", "vertical", "horizontal", "top", "bottom", "inner", "outer", etc. are based on the orientation or positional relationship shown in the drawings, and are merely for the convenience of describing the embodiments of the present application and simplifying the description, rather than indicating or implying that the device or member stated must have a particular orientation and are provided and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meaning of the terms above in embodiments of the present application can be understood by a person skilled in the art in accordance with specific conditions.

In the embodiments of the present application, unless clearly stated and defined otherwise, a first feature being located "on" or "under" a second feature means that the first feature is in direct contact with the second feature, or the first feature is in contact with the second feature by an intermediate medium. In addition, the first feature is "on", "above" and "over" the second feature can refer to that the first feature is directly above or obliquely above the second feature, or simply refer to that the level height of the first feature is higher than that of the second feature. A first feature is "under", "below" and "beneath" a second feature can refer to that the first feature is directly below or obliquely below the second feature, or simply refer to that the level height of the first feature is lower than that of the second feature.

In the description of this specification, descriptions with reference to the terms "an embodiment", "some embodiments", "examples", "specific examples", or "some examples" etc. refers to that specific features, structure, materials or characteristics described in conjunction with an embodiment or an example are comprised in at least an embodiment or example according to the embodiments of the present application. In this specification, the schematic representations of the above terms do not necessarily refer to a same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

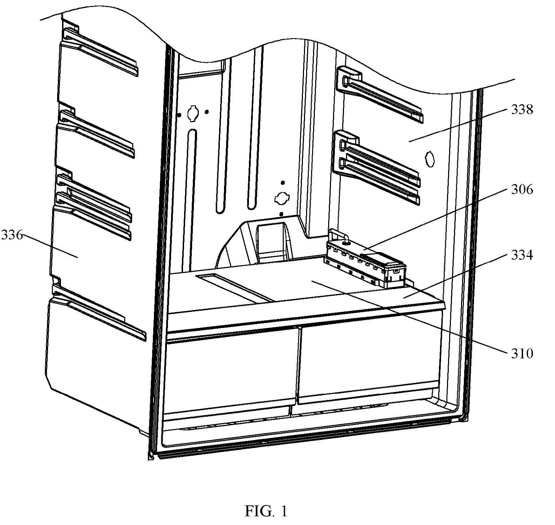

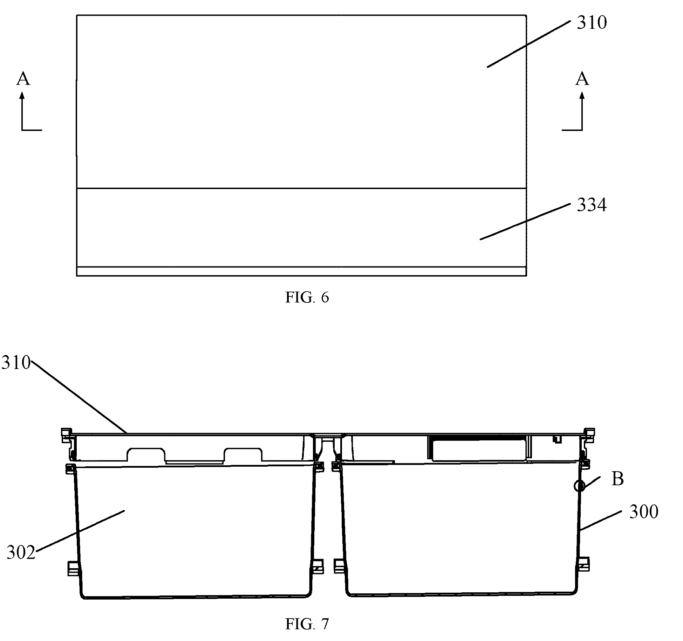

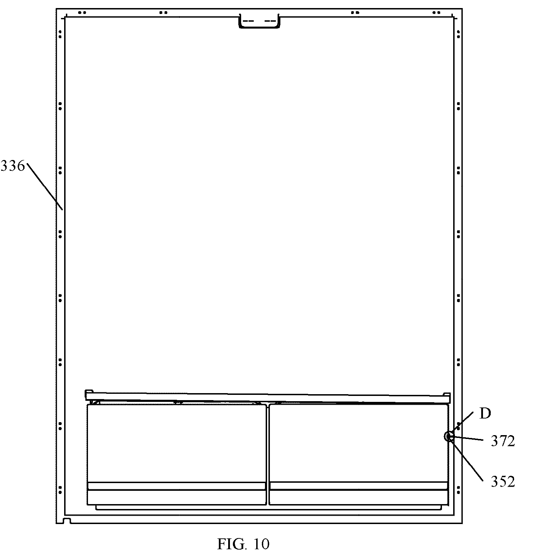

As shown in FIG. 1 to FIG. 11, an embodiment of the present application provides a storage device, comprising a storage member 300, a gas supply member 306, and a drive member 308. In the embodiment of the present application, the storage member 300 is provided with a storage space 302. The gas supply member 306 is mounted at the storage member 300 and in fluid communication with the storage space 302 to adjust a concentration of gas inside the storage space 302. The drive member 308 is suitable for driving the storage member 300 to operate based on a parameter of gas in the storage space 302, to provide fluid communication between the storage space 302 and outside.

In the storage device of the embodiment of the present application, ingredients may be placed in the storage member 302 by providing the storage space 302 inside the storage member 300; the concentration of gas in the storage space 302 may be adjusted by providing the gas supply member 306 at the storage member 300, and the storage conditions of different ingredients for concentration of gas may be matched by adjusting the concentration of gas. When at least one of a pressure of gas and a concentration of gas in the storage space 302 does not meet a storage requirement, the drive member 308 may drive the storage member 300 to operate to provide fluid communication between the storage space 302 and the outside by providing the drive member 308, which timely adjusts at least one of the pressure of gas and the concentration of gas in the storage space 302, and also relieves pressure for the storage space 302. When being applied to the field of ingredient preservation, the storage device may -prolong a preservation period of ingredients by adjusting the pressure of gas and the concentration of gas in the storage space 302.

Referring to FIG. 1 to FIG. 11, in the storage device provided in the embodiment of the present application, the storage member 300 may roughly form a frame structure with an opening at a top. In the embodiment of the present application, the storage member 300 may be mounted in refrigeration equipment such as refrigerators, freezers and coolers. Taking the refrigerator for example, the storage member 300 is mounted in the refrigerator in a drawable manner. In an implementation, a drawer of the refrigerator may be directly used as the storage member 300.

The storage member 300 is provided with a cover body 310, which is covered at the storage member 300 to seal the storage space 302 inside the storage member 300. In an implementation, the cover body 310 may be directly covered at the storage member 300. To improve the sealing between the cover body 310 and the storage member 300, seal rings, gaskets, and other structures may be provided between the cover body 310 and the storage member 300. In another implementation, the cover body 310 may also be directly fixedly mounted at a cabinet body of the refrigerator. In the embodiment of the present application, the cover body 310 is directly fixed to the cabinet body of the refrigerator. In an embodiment, the storage member 300 may be switchable between a pull-out position and a push-back position relative to the cover body 310. When the storage member 300 is in the pull-out position, a user may put ingredients into the storage member 300. When the storage member 300 is in the push-back position, the storage member 300 may match with the cover body 310 to form a relatively sealed storage space 302, which may prevent loss of moisture during storage of the ingredients.

In the embodiment of the present application, the storage device further comprises a humidity control apparatus 304, and the humidity control apparatus 304, the gas supply member 306, and the drive member 308 are mounted at the cover body 310. In some other embodiments, the humidity control apparatus 304 and the gas supply member 306 may also be mounted at other positions, such as the cabinet body of the refrigerator. When the humidity control apparatus 304 and the gas supply member 306 are mounted in the cabinet, the humidity control apparatus 304 is used for adjusting relative humidity in the storage space 302. In the embodiment of the present application, the humidity control apparatus 304 comprises a second water box 330 and an atomization member 332.

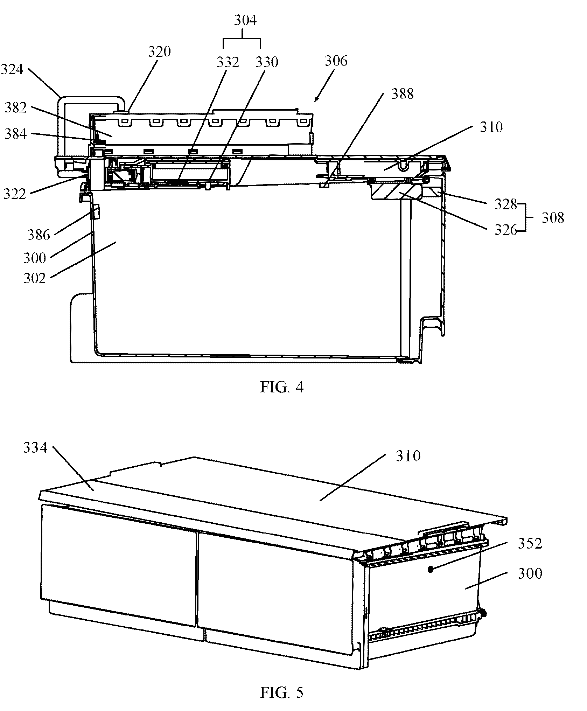

Referring to FIG. 4, the user may add water to the second water box 330 to supplement water to the humidity control apparatus 304 timely. The second water box 330 may be mounted at the cover body 310. To convert the water in the second water box 330 into water mist, a bottom of the second water box 330 is also provided with a through hole, and the atomization member 332 is mounted in the through hole of the second water box 330. As such, the atomization member 332, may convert the water in the second water box 330 into water mist after it starts to operate, and the water mist may be sprayed into the storage space 302 to increase the relative humidity in the storage space 302. By increasing the relative humidity in the storage space 302, for ingredients such as mantis shrimps and crabs that require certain humidity to maintain vitality, the preservation period of the mentioned aquatic products may be prolonged.

In other embodiments, the humidity control apparatus 304 may also use an electrode plate to electrolyze the water in the second water box 330 for a purpose of atomization and humidification. For example, a plurality of electrode plates may be provided in the second water box 330. When the electrode plates are in operation, the water in the second water box 330 may be electrolyzed to form active oxygen and hypochlorite ions, and the water in the second water box 330 is purified. Since the water in the second water box 330 has been purified, the purified water in the second water box 330 may be sprayed into the storage space 302 in the form of water mist when the water in the second water box 330 is electrolyzed by electrode plates. During this procedure, the water mist may increase the humidity in the storage space 302. Part of the active oxygen formed by electrolyzing the water acts on surface of the ingredients in the storage space 302 to sterilize and deodorize synergistically, while another part of the active oxygen is decomposed to form oxygen molecules, which may also increase the concentration of oxygen in the storage space 302 and prolong the preservation period of fresh ingredients.

The humidity control apparatus 304 may also be implemented using other apparatuses that may humidify, which will not be listed here. In addition, there is no specific limit to a quantity of humidity control apparatus 304. When the storage space 302 inside the storage member 300 is relatively small, one set of humidity control apparatus 304 may be provided. When the storage space 302 inside the storage member 300 is relatively large, a plurality of sets of humidity control apparatuses 304 may be provided.

The gas supply member 306 is used for adjusting the concentration of gas in the storage space 302. For example, the gas supply member 306 may be used for providing oxygen, nitrogen, carbon dioxide, or a mixture of the above types of gases to the storage space 302. Taking the example of the gas supply member 306 providing oxygen, the gas supply member 306 may be used for adjusting the concentration of oxygen in the storage space 302. Therefore, the gas supply member 306 may directly communicate with the storage space 302 or communicate with the storage space 302 through a pipeline 324. By providing the gas supply member 306, it is possible to adjust the concentration of oxygen in the storage space 302 by controlling the gas supply member 306. By adjusting the concentration of oxygen in the storage space 302, the concentration of oxygen in the storage space 302 may match the storage conditions of different ingredients for concentration of oxygen.

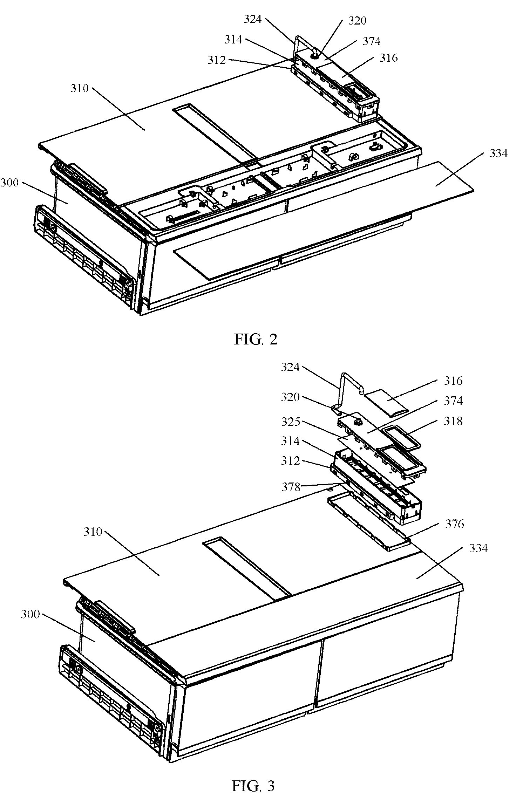

Referring to FIG. 2 to FIG. 4, according to an embodiment of the present application, the gas supply member 306 comprises a mount housing 312, a first water box 314, and a gas production member 325. The mount housing 312 is mounted at the cover body 310; the first water box 314 is mounted at the mount housing 312 and communicates with the storage space 302 through the pipeline 324; the gas production member 325 is provided at the first water box 314.

In an embodiment of the present application, the mount housing 312 is used for fixing members such as the first water box 314 and the gas production member 325. The mount housing 312 is mounted at the cover body 310. The mount housing 312 and the cover body 310 may be connected and fixed through bolts, screws, and other fasteners. The mount housing 312 and the cover body 310 may also be connected through snap-fitting. As shown in FIG. 3, several slots 378 may be provided at the mount housing 312 along an edge of the mount housing 312. Accordingly, several claws 376 are provided at positions corresponding to the mount housings 312 at the cover body 310. When the mount housing 312 is mounted at the cover body 310, the claws 376 at the cover body 310 may be directly snap-fitted to the slots 378 at the mount housing 312 to fix the mount housing 312.

As mentioned above, the cover body 310 may be directly fixedly connected to the cabinet body of the refrigerator. The mount housing 312 may be provided at a position of the cover body 310 that does not interfere with other devices inside the cabinet body. For example, the mount housing 312 may be provided at a side of the cover body 310 close to an inner wall of the cabinet body.

There is no specific limit on a quantity of the gas supply members 306. When the storage space 302 within the storage member 300 is relatively small, one set of the gas supply member 306 may be provided. When the storage space 302 within the storage member 300 is relatively large, a plurality of sets of the gas supply members 306 may be provided.

A mount space is provided inside the mount housing 312, and the first water box 314 is mounted in the mount space inside the mount housing 312. The first water box 314 is used for supplying water to the gas supply member 306. The gas production member 325 is provided in the first water box 314, and is used for converting the water in the first water box 314 into oxygen. In the embodiment of the present application, the gas production member 325 may electrolyze the water in the first water box 314 using the electrode plate to generate active oxygen. To introduce active oxygen into the storage space 302, the first water box 314 may communicate with the storage space 302 through the pipeline 324. As such, when the gas production member 325 converts the water in the first water box 314 into active oxygen, the pressure in the first water box 314 will gradually increase. As the pressure in the first water box 314 increases, the active oxygen in the first water box 314 may enter the storage space 302 through the pipeline 324. After entering the storage space 302, the active oxygen may be decomposed again to form oxygen molecules, which may adjust the concentration of oxygen in the storage space 302.

The gas production member 325 may also adopt other members or apparatuses that may product oxygen, such as molecular sieve oxygen production, chemical oxygen production, etc., which will not be listed here.

In some other embodiments, the gas supply member 306 comprises an electrolytic chamber 382 and an electrolytic member 384, where the electrolytic chamber 382 is mounted at the cover body 310 and in fluid communication with the storage space 302; the electrolytic member 384 is mounted at the electrolytic chamber 382.

The electrolytic chamber 382 is used to receive electrolytes such as clean water and electrolyte solution, and the electrolytic member 384 may be electrode plates, anode plates, and cathode plates, etc. After the electrolytic member 384 starts operating, the electrolyte in the electrolytic chamber 382 may be electrolyzed to generate oxygen. The oxygen may be introduced into the storage space 302 to provide oxygen to the ingredients in the storage space 302. In the embodiment, oxygen may be produced by electrolysis to supply oxygen to the storage space 302.

It should be noted that in some other embodiments, the second water box 330 in a humidity control apparatus may also be combined with the first water box 314 in the gas supply member 306, that is, one water box may be used for supplying water to both the humidity control apparatus and the gas supply member 306. When the humidity control apparatus and the gas supply member 306 use a water box jointly, the water box may be provided with a through hole communicating with the storage space 302. The atomization member 332 may be mounted at the position of the through hole, and the gas production member 325 may be mounted in the water box and communicate with the storage space 302 through the pipeline 324. As mentioned above, the functions of atomizing water and producing oxygen may also be provided simultaneously through electrode plates.

Referring to FIG. 2 and FIG. 3, according to an embodiment of the present application, the gas supply member 306 further comprises a seal cover 316, the seal cover 316 is movably mounted at the first water box 314, and a first seal 318 is provided between the seal cover 316 and the first water box 314.

The water in the first water box is prevented from overflowing by providing the seal cover 316 at the first water box 314. The seal cover 316 is movably mounted at the first water box 314. In an embodiment, the seal cover 316 may be detachable from the first water box 314 to facilitate the user to add water to the first water box 314. The seal cover 316 may be mounted at the first water box 314 through various forms such as sliding, snap-fitting, etc.

When the seal cover 316 is covered at the first water box 314, the first seal 318 is provided between the seal cover 316 and the first water box 314 to improve sealing performance between the seal cover 316 and the first water box 314. The first seal 318 may be replaced with sealable elements such as seal rings, sealants, etc.

According to an embodiment of the present application, the first water box 314 is provided with an exhaust port 320, the storage member 300 is provided with an air inlet 322, and two ends of the pipeline 324 are respectively connected to the exhaust port 320 and the air inlet 322.

In the embodiment of the present application, the exhaust port 320 may be provided at a side wall of the first water box 314 or at the seal cover 316. Referring to FIG. 2 and FIG. 3, the first water box 314 is also provided with an upper cover 374, and the exhaust port 320 is opened at the upper cover 374. A back of the storage member 300 is provided with the air inlet 322, and the two ends of the pipeline 324 are respectively connected to the exhaust port 320 and the air inlet 322. As such, when oxygen is prepared by the gas production member 325, the oxygen may enter the storage space 302 inside the storage member 300 through the pipeline 324. It should be noted that since the storage member 300 may be switchable between the pull-out position and the push-back position relative to the cover body 310, in the embodiment of the present application, the pipeline 324 is a flexible pipeline. In an embodiment, the pipeline 324 may undergo certain deformation with the action of the storage member 300, to avoid the pipeline 324 falling off from the storage member 300 during pulling or pushing by the user of the storage member 300.

The concentration of oxygen in the storage space 302 may be increased from 21% to 30% through 60% by providing the gas supply member 306 at the storage member 300. A high oxygen storage environment is more conducive to enhancing the vitality of aquatic ingredients, and effectively extends the preservation period.

When the pressure of gas in the storage space 302 is too high, an action of a pressure relief member may be used to relieve pressure. The pressure relief member may be mounted in different positions according to actual conditions.

In the embodiment of the present application, pressure relief modes may at least comprise the following.

### Pressure relief mode 1

The pressure relief member comprises the drive member 308, which may be mounted at the cover body 310 or the cabinet body of the refrigerator. The drive member 308 may drive the storage member 300 to operate to communicate the storage space 302 in the storage member 300 with the outside. In an embodiment, when the concentration of oxygen, pressure, or humidity inside the storage space 302 is too high, the drive member 308 may push the storage member 300 out and separate the storage member 300 from the cover body 310. As such, the storage member 300 communicates with the outside, which reduces the concentration of oxygen and humidity inside the storage space 302 and relieves the pressure. After the above actions are completed, the drive member 308 may automatically return to an initial state, or may be manually pushed back to the initial state by the user.

Referring to FIG. 4, in an implementation, the drive member 308 comprises a mount seat 326 and a push rod 328; the mount seat 326 is mounted at the cover body 310; a first end of the push rod 328 is stretchably mounted at the mount seat 326, and a second end of the push rod 328 is suitable for driving the storage member 300 to operate.

The mount seat 326 is used for mounting the push rod 328. The mount seat 326 may be mounted at a side of the cover body 310 facing the storage member 300 and near an edge of the storage member 300. The first end of the push rod 328 is inserted into the mount seat 326, and the second end of the push rod 328 abuts against an inner wall of the storage member 300. When the concentration of oxygen, pressure, or humidity in the storage space 302 is too high, the push rod 328 may extend a certain length. The when the push rod 328 extends, may push the storage member 300 away by a certain distance. It should be noted that a distance that the push rod 328 pushes the storage member 300 is shorter than a distance between an outer wall of the storage member 300 and an inner wall of a door body of a refrigerator, which may prevent collision between the storage member 300 and an inner side of the door body of the refrigerator when the push rod 328 pushes the storage member 300. In an embodiment, the distance for the push rod 328 to push the storage member 300 to operate is only required to ensure that the storage member 300 is separated from the cover body 310, and the storage space 302 inside the storage member 300 communicates with the outside.

After a push-out action of the push rod 328 is completed, the push rod 328 may automatically return to the initial state, or the push rod 328 may be manually pushed back to the initial state by the user.

In other embodiments, the drive member 308 may also be implemented in other forms. For an example, the drive member 308 may comprise a motor, a worm wheel, and a worm gear, where the motor is mounted at a side of the cover body 310 facing the storage member 300, and an output shaft of the motor is mounted with a worm wheel to mesh and drive the worm wheel with the worm gear. The forward and reverse rotations of the motor may synchronously drive the worm gear to stretch or retract, and the actions of pushing out the storage member 300 and retracting the worm gear are completed.

### Pressure relief mode 2

Referring to FIG. 5 to FIG. 8, in the embodiment of the present application, in addition to using the drive member 308 to push out the storage member 300 to relieve the pressure, the pressure may also be relieved by providing the storage member 300 with an exhaust valve 352, that is, the pressure relief member comprises the exhaust valve 352.

As shown in FIG. 5, the exhaust valve 352 may be mounted at the storage member 300, and is suitable for communicating the storage space 302 with the outside or separating the storage space 302 from the outside.

In an embodiment, when the pressure inside the storage space 302 is too high, the exhaust valve 352 may communicate the storage space 302 with the outside to relieve the pressure. When the pressure inside the storage space 302 returns to normal, the exhaust valve 352 may separate the storage space 302 from the outside to seal the storage space 302 and prevent moisture and oxygen leakage in the storage space 302.

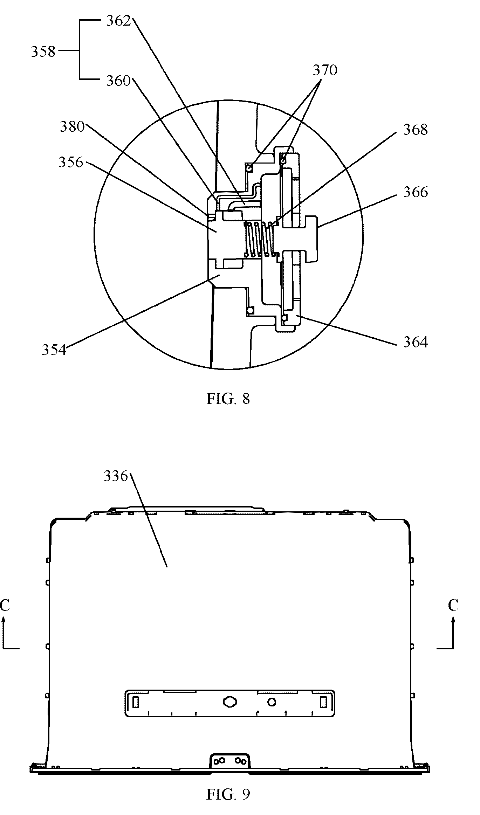

Referring to FIG. 8, in an embodiment of the present application, the exhaust valve 352 comprises a valve seat 354 and a valve core 356; the valve seat 354 is mounted at the storage member 300 and is provided with an exhaust passage 358 communicates the storage space 302 with the outside; the valve core 356 is movably mounted at the valve seat 354 and is switchable between a first position and a second position. In the first position, the valve core 356 blocks the exhaust passage 358, and in the second position, the valve core 356 avoids the exhaust passage 358.

The valve seat 354 is mounted at a side wall of the storage member 300, and is used for mounting the valve core 356. The valve seat 354 is provided with the exhaust passage 358, and two ends of the exhaust passage 358 respectively communicate with the storage space 302 and the outside. A side of the valve seat 354 facing the storage space 302 is provided with an exhaust hole 380 communicating with the exhaust passage 358. The valve core 356 may be switchable between the first position and the second position relative to the valve seat 354. In the first position, the valve core 356 blocks the exhaust passage 358, and the interior and exterior of the storage space 302 are disconnected from each other, which may prevent moisture and oxygen leakage in the storage space 302. In the second position, the valve core 356 may avoid the exhaust passage 358, and the interior and exterior of the storage space 302 communicate through the exhaust passage 358, which may relieve pressure for the storage space 302. As such, the interior of the storage space 302 may be disconnected from or communicate with the outside by adjusting the position of valve core 356.

Referring to FIG. 8, in an embodiment of the present application, the exhaust passage 358 comprises a first passage 360 and a second passage 362. In the second position, the storage space 302 communicates with the outside through at least one of the first passage 360 and the second passage 362; the first passage 360 is provided at a side of the valve seat 354 close to the storage space 302, and the second passage 362 is provided at a side of the valve seat 354 away from the storage space 302.

It should be noted that a flow capacity of the first passage 360 is relatively small and may discharge gas of small flow, while a flow capacity of the second passage 362 is relatively large and may discharge gas of large flow. In the second position, the valve core 356 may avoid the first passage 360 or the second passage 362, or both the first passage 360 and the second passage 362 simultaneously. In the embodiment of the present application, the valve core 356, when in the second position, simultaneously avoids the first passage 360 and the second passage 362, which relieves the pressure rapidly. In addition, when the valve core 356 is located between the first passage 360 and the second passage 362, it is possible to only communicate the first passage 360. In an embodiment, when the valve core 356 simultaneously blocks the first passage 360 and the second passage 362, the valve core 356 is in a position near the storage space 302; when the valve core 356 avoids the first passage 360, the valve core 356 is located between the first passage 360 and the second passage 362; when the valve core 356 simultaneously avoids the first passage 360 and the second passage 362, the valve core 356 is in a position far away from the storage space 302.

Referring to FIG. 8, in an embodiment of the present application, the exhaust valve 352 further comprises a valve cover 364, an adjustment member 366, and a support 368. The valve cover 364 is mounted at the valve seat 354; the adjustment member 366 is movably mounted at the valve cover 364; the support 368 is mounted between the adjustment member 366 and the valve core 356 to abut tightly against the valve core 356.

The valve cover 364 may be in thread connection with the valve seat 354, and the adjustment member 366 may also be in thread connection with the valve cover 364. The support 368 is further mounted between the adjustment member 366 and the valve core 356, and the support 368 may adopt springs. As such, it may be ensured that the valve core 356 always abut tightly against the valve seat 354 under the support action of the support 368, which prevents moisture and oxygen in the storage space 302 from leaking. When it is necessary to adjust the valve core 356 to the second position, the adjustment member 366 may be loosened appropriately to reduce a support force of the support 368 at the valve core 356. When the pressure of gas in the storage space 302 is high, the valve core 356 may be pushed outward, and the valve core 356 may be switchable from the first position to the second position.

An anti-slip layer is further provided at an outer peripheral surface of the valve seat 354 and the adjustment member 366, which facilitates the user to hold and mount the valve seat 354, and further facilitates the user to adjust the adjustment member 366.

To improve the sealing performance between the valve cover 364 and the valve seat 354, as well as between the valve seat 354 and the storage member 300, a second seal 370 is provided between the valve cover 364 and the valve seat 354, and the second seal 370 is further provided between the valve seat 354 and the storage member 300. Alternatively, the second seal 370 is provided only between the valve cover 364 and the valve seat 354; or the second seal 370 is provided only between the valve seat 354 and the storage member 300. The second seal 370 may be gaskets, seal rings, etc.

In an embodiment, the above exhaust valve 352 is an integrated exhaust valve.

### Pressure relief mode 3

Referring to FIG. 9 to FIG. 11, in the embodiment of the present application, to relieve the pressure within the storage space 302, in addition to using the drive member 308 and the integrated exhaust valve 352, the pressure may also be relieved by providing a split type exhaust valve 352 at the storage member 300, that is, the pressure relief member comprises the exhaust valve 352 and the match member 372.

In the implementation, the exhaust valve 352 may be mounted at the storage member 300, and the match member 372 may be mounted at the cabinet body of the refrigerator, that is, the cabinet body is a mount position of the storage member 300. As mentioned above, the storage member 300 may be switchable between the push-back position and the pull-out position relative to the cabinet body. When the storage member 300 is in the push-back position, a position of the match member 372 corresponds to a position of the exhaust valve 352. The match member 372 may drive the exhaust valve 352 to operate to communicate the exhaust valve 352 the interior of the storage space 302 with the outside. When the storage member 300 is in the pull-out position, the match member 372 is separated from the exhaust valve 352, and the exhaust valve 352 may be in a state that communicates the interior of the storage space 302 communicates with the outside, or in a state that separates the interior of the storage space 302 from the outside.

It should be noted that when the storage member 300 is in the push-back position, the match member 372 may stretch or retract based on the pressure of gas inside the storage space 302. When the pressure of gas in the storage space 302 is high, the match member 372 may retract, and the exhaust valve 352 is open. When the pressure of gas in the storage space 302 meets a standard, the match member 372 may stretch and tighten the exhaust valve 352 to separate the storage space 302 from the outside.

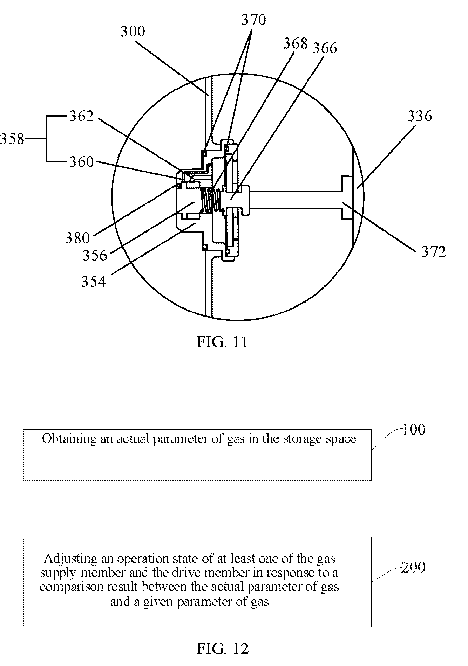

Referring to FIG. 11, in an embodiment of the present application, the exhaust valve 352 comprises a valve seat 354 and a valve core 356. The valve seat 354 is mounted at one of the storage member 300 and the cabinet body, and is provided with the exhaust passage 358 communicating the storage space 302 with the outside. The valve core 356 is movably mounted at the valve seat 354. In the push-back position, the match member 372 is suitable for matching with the valve core 356 to avoid the exhaust passage 358; in the pull-out position, the match member 372 is separated from the valve core 356.

Taking the valve seat 354 being mounted at the storage member 300 for example, the valve seat 354 may be mounted at the side wall of the storage member 300. The valve seat 354 is used for mounting the valve core 356, and the valve seat 354 is provided with the exhaust passage 358. The two ends of the exhaust passage 358 respectively communicate with the storage space 302 and the outside. The side of the valve seat 354 facing the storage space 302 is provided with the exhaust hole 380 communicating with the exhaust passage 358. When the storage member 300 is in the push-back position, the match member 372 is matched with the valve core 356, the valve core 356 is in a position that avoids the exhaust passage 358, and the interior of the storage space 302 communicates with the outside, which may relieve pressure for the storage space 302. When the storage member 300 is in the pull-out position, the match member 372 is separated from the valve core 356, and the valve core 356 may be in a position that avoids the exhaust passage 358 or in a position that blocks the exhaust passage 358. As such, the interior of storage space 302 may be separated from or communicate with the outside by adjusting the position of the storage member 300.

According to an embodiment of the present application, the valve seat 354 is provided with a guide member, when switching between the pull-out position and the push-back position, the match member 372 is suitable for guiding and matching with the guide member.

It is ensured that the guide member may provide guidance to the match member 372 when pulling out and pushing back the storage member 300 by providing the guide member at the valve seat 354, the match member 372 is accurately aligned with the valve core 356 to be matched with the valve core 356. The guide member may be a guide groove provided at the valve seat 354, and the guide groove may provide guidance for the match member 372 during the operation of the storage member 300.

According to an embodiment of the present application, the storage device further comprises a first detection member 386, which is mounted at at least one of the storage member 300 and the cover body 310, and the push rod 328 operates based on a first detection signal of the first detection member 386.

The automation level of the storage device may be improved by providing the first detection member 386 at the storage member 300 or cover body 310. In an embodiment, the first detection member 386 may be a pressure sensor. When the first detection member 386 detects that the pressure in the storage space 302 exceeds a pressure threshold, the first detection member 386 may generate the first detection signal for characterizing that the pressure exceeds the pressure threshold. When receiving the first detection signal, the push rod 328 may automatically stretch to push the storage member 300 out of a certain distance, which communicates the storage space 302 with the outside. When the storage space 302 communicates with the outside, the pressure may be relieved.

The first detection member 386 may also be an oxygen concentration sensor. When the first detection member 386 detects that the concentration of oxygen is lower than an oxygen concentration threshold, the first detection member 386 may generate a first detection signal for characterizing that the concentration of oxygen is lower than the oxygen concentration threshold, and when receiving the first detection signal, the push rod 328 may automatically stretch to push the storage member 300 out of a certain distance, which communicates the storage space 302 with the outside. When the storage space 302 communicates with the outside, the external air may enter the storage space 302 to supplement the oxygen to the storage space 302.

Alternatively, when the first detection member 386 detects that the concentration of oxygen is lower than the oxygen concentration threshold, the first detection member 386 may generate a first detection signal for characterizing that the concentration of oxygen is lower than the oxygen concentration threshold, and the gas supply member 306, when receiving the first detection signal, may automatically start to supplement oxygen to the storage space 302.

According to an embodiment of the present application, the storage device further comprises a second detection member 388, which is mounted at at least one of the storage member 300 and the cover body 310, and the atomization member 332 starts and stops based on a second detection signal of the second detection member 388.

The second detection device 388 may adopt a humidity sensor. When the second detection device 388 detects that the relative humidity in the storage space 302 is lower than a humidity threshold, it may generate the second detection signal for characterizing that the relative humidity is lower than the humidity threshold. After receiving the second detection signal, the humidity control apparatus 304 may automatically start to humidify the storage space 302.

Various storage parameters of the storage space 302 may be automatically controlled by providing the first detection member 386 and the second detection member 388 at the storage device. When the storage device is applied to the field of preservation, the preservation period for aquatic ingredients may be correspondingly prolonged.

Referring to FIG. 1 to FIG. 5, according to an embodiment of the present application, the cover body 310 is provided with a control panel 334, which is electrically connected to at least one of the humidity control apparatus 304, the gas supply member 306, and the drive member 308.

At least one of the humidity control apparatus 304, the gas supply member 306, and the drive member 308 may be manually controlled to operate through the control panel 334 by providing the control panel 334 at the cover body 310. For example, the cover body 310 may be integrated with a display panel, which displays the relative humidity and concentration of oxygen in the storage space 302. When the user notices that the relative humidity and concentration of oxygen in the storage space 302 do not meet the standard, the humidity control apparatus 304 and the gas supply member 306 may be manually controlled by manipulating the control panel 334.

An embodiment of the present application provides a storage cabinet 336, comprising a cabinet body, where the storage device as described above is provided.

According to the storage cabinet 336 provided in the embodiment of the present application, not only the preservation period of aquatic ingredients may be prolonged, but also the automation level of the storage cabinet 336 may be improved by providing the above-mentioned storage device inside the cabinet.

According to an embodiment of the present application, the cabinet is provided with a refrigeration compartment 338 inside, and the storage device is provided in the refrigeration compartment 338 in a drawable manner. In an embodiment of the present application, the storage device may be provided in a freezer compartment.

Referring to FIG. 12, an embodiment of the present application provides a storage method based on the mentioned storage device, comprising:
step 100, obtaining an actual parameter of gas in the storage space 302; and
step 200, adjusting an operation state of at least one of the gas supply member 306 and the drive member 308 in response to a comparison result between the actual parameter of gas and a given parameter of gas.

In the storage method provided in the embodiment of the present application, by obtaining the actual parameter of gas in the storage space 302, and adjusting at least one operation of the gas supply member 306 and the drive member 308 based on the comparison result between the actual parameter of gas and the given parameter of gas, the parameter such as concentration of gas or the pressure of gas in the storage space 302 may be adjusted timely. As such, the storage parameter of the storage space 302 may be adjusted timely. When being applied to the field of preservation, the storage device may create a storage environment conducive to the preservation of aquatic ingredients in the storage space 302, which avoids a situation of aquatic mortality caused by high concentration of gas and high pressure of gas during the preservation of aquatic ingredients, and extends the preservation period of aquatic ingredients.

In step 100, the actual parameter of gas in the storage space 302 may be obtained through the first detection member 386 and the second detection member 388 described above. For example, the first detection member 386 may be a pressure sensor or an oxygen concentration sensor. As such, the pressure of gas and the concentration of oxygen in the storage space 302 may be detected through the first detection member 386. The second detection member 388 may be a humidity sensor. As such, the relative humidity in the storage space 302 may be detected through the second detection member 388.

In step 200, at least one operation of the gas supply member 306 and the drive member 308 may be adjusted based on the comparison result obtained in step 100 between the actual parameter of gas and the given parameter of gas.

In this step, an individual action mode of the gas supply member 306 or the drive member 308 may be used for controlling, or a jointly action mode of the gas supply member 306 or the drive member 308 may be used for controlling.

For example, if, in step 100, the actual parameter of gas is obtained through the pressure sensor, then in step 200, the drive member 308 is controlled correspondingly. If, in step 100, the actual parameter of gas is obtained through the pressure sensor and the oxygen concentration sensor, then in step 200, both the drive member 308 and the gas supply member 306 are controlled simultaneously.

As mentioned above, in an embodiment of the present application, when the actual parameter of gas comprises the actual pressure of gas, and the given parameter of gas comprises the given pressure of gas, step 200 comprises step 210: controlling the drive member 308 to operate to communicate the storage space 302 with the outside in accordance with a determination that the actual pressure of gas is greater than the given pressure of gas.

In an embodiment, in step 210, if the actual pressure of gas inside the storage space 302 obtained through the pressure sensor is greater than the given pressure of gas, then the drive member 308 is controlled to operate to push out the storage member 300, and the storage space 302 may communicate with the outside. Through this step, the pressure inside the storage space 302 may be relieved. It should be noted that a reason for an excessive pressure of gas in the storage space 302 may be due to an oxygenation device filling too much oxygen, or gas released after the death of aquatic ingredients.

According to an embodiment of the present application, after the step 210, the method further comprises step 211: controlling the drive member 308 to reset in accordance with a determination that the actual pressure of gas reaches the given pressure of gas.

In this step, when the actual pressure of gas obtained by the pressure sensor decreases to the given pressure of gas, the drive member 308 resets. After the drive member 308 resets, the user may manually push the storage member 300 back to the push-back position.

In the embodiment of the present application, when the actual parameter of gas comprises the actual concentration of oxygen, and the given parameter of gas comprises the given concentration of oxygen, step 200 comprises step 220: controlling the gas supply member 306 to start and/or the drive member 308 to operate, to communicate the storage space 302 with the outside in accordance with a determination that the actual concentration of oxygen is lower than the given concentration of oxygen.

In an embodiment, in the step 220, if the actual concentration of oxygen in the storage space 302 obtained through the oxygen concentration sensor is lower than the given concentration of oxygen, then the drive member 308 and/or the gas supply member 306 is controlled to operate. When the drive member 308 operates, the drive member 308 may push out the storage member 300 to communicate the storage space 302 with the outside, which may allow external air to enter the storage space 302 for supplementing oxygen. When acting, the gas supply member 306 may also promptly supplement oxygen into the storage space 302. It should be noted that in this step, the drive member 308 may be separately controlled to operate, the gas supply member 306 may be separately controlled to operate, and both the drive member 308 and the gas supply member 306 may be controlled to operate simultaneously. For example, when the actual concentration of oxygen is only slightly lower than the given concentration of oxygen, the drive member 308 may be separately controlled to operate. When the actual concentration of oxygen is much lower than the given concentration of oxygen, both the drive member 308 and the gas supply member 306 may be controlled to operate simultaneously.

In the embodiment of the present application, when the actual parameter of gas comprises the actual humidity of air, and the given parameter of gas comprises the given humidity of air, step 200 comprises step 230: controlling the humidity control apparatus 304 to start in accordance with a determination that the actual humidity of air is lower than the given humidity of air.

In an embodiment, in step 230, if the actual humidity of air in the storage space 302 obtained through the air humidity sensor is lower than the given humidity of air, the humidity control apparatus 304 is controlled to start. Through this step, the actual humidity of air in the storage space 302 may be adjusted timely to ensure that the humidity of air in the storage space 302 meets the storage condition for aquatic ingredients.

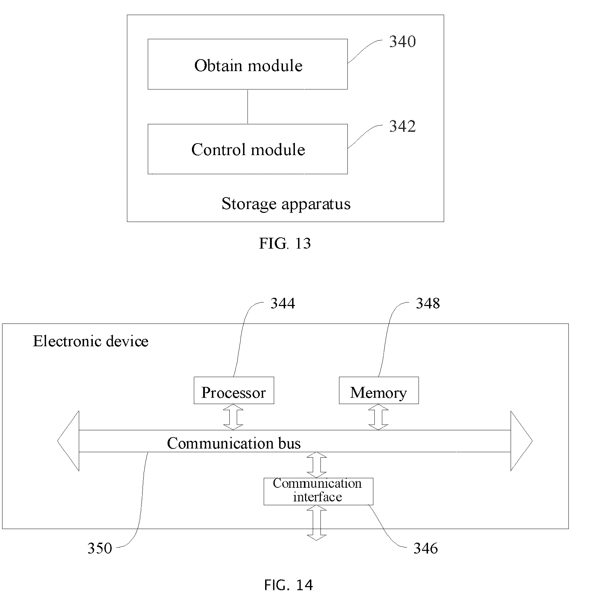

FIG. 13 illustrates a storage apparatus provided in an embodiment of the present application, comprising:
an obtain module 340, used for obtaining an actual parameter of gas in the storage space 302; and
a control module, used for adjusting an operation state of at least one of the gas supply member 306 and the drive member 308 in response to a comparison result between the actual parameter of gas and a given parameter of gas.

FIG. 14 illustrates a schematic structural diagram of an electronic device. As shown in FIG. 14, the electronic device may comprise: a processor 344, a communication interface 346, memory 348, and a communication bus 350, where the processor 344, the communication interface 346, and the memory 348 communicate with each other through the communication bus 350. The processor 344 may call a logical instruction in the memory 348 to perform the following method:
obtaining an actual parameter of gas in the storage space 302; and
adjusting an operation state of at least one of the gas supply member 306 and the drive member 308 in response to a comparison result between the actual parameter of gas and a given parameter of gas.

In addition, the logic instructions in the memory 348 described above may be implemented in the form of a software functional unit and may be stored in a computer-readable storage medium as being sold or used as a separate product. Based on such understanding, the solution of the present application or a part of the solution, which is essential or contributes to the prior art, may be embodied in the form of a software product, which is stored in a storage medium, comprising several instructions to cause a computer device (which may be a personal computer, server, or network device, etc.) to perform all or part of the steps of the methods described in various embodiments of the present application. The storage medium described above comprises various media that may store program codes such as flash disk, mobile hard disk, read-only memory (ROM), random access memory (RAM), magnetic disk, or optical disk.

An embodiment of the present application provides a computer program product, comprising: a computer program stored on a non-transitory computer-readable storage medium, where the computer program comprises a program instruction, when executed by a computer, causing the computer to perform the method provided by the above-mentioned embodiments. For example, the method comprises:
obtaining an actual parameter of gas in the storage space 302; and
adjusting an operation state of at least one of the gas supply member 306 and the drive member 308 in response to a comparison result between the actual parameter of gas and a given parameter of gas.

An embodiment of the present application provides a non-transitory computer-readable storage medium on which a computer program is stored, where the computer program, when executed by a processor 344, performs the method provided by the above-mentioned embodiments. For example, the method comprises:
obtaining an actual parameter of gas in the storage space 302; and
adjusting an operation state of at least one of the gas supply member 306 and the drive member 308 in response to a comparison result between the actual parameter of gas and a given parameter of gas.

The device embodiments described above are merely illustrative, where the units described as separate members may or may not be physically separate, and the members displayed as units may or may not be physical units, that is, they may be located at the same place, or may be distributed to a plurality of network units. Some or all of the modules may be selected according to actual needs to achieve the purpose of the solution of the present embodiment. Those of ordinary skill in the art may understand and implement the embodiments described above without creative efforts.

Through the description of the embodiments above, those skilled in the art may clearly understand that the various embodiments may be implemented by means of software and a necessary general hardware platform, and of course, may be implemented by hardware. Based on such understanding, the solution of the present application or a part of the solution, which is essential or contributes to the related art, may be embodied in the form of a software product, which is stored in a storage medium such as ROM/RAM, magnetic disks, optical disks, etc., comprising several instructions to cause a computer device (which may be a personal computer, server, or network device, etc.) to perform various embodiments or a part of the methods described in various embodiments.
It should be noted that above embodiments are only used to illustrate the solution of the present application, not to limit it; although the present application is described in detail with reference to the aforementioned embodiments, those skilled in the art should understand that they may still modify the solutions recited in the aforementioned embodiments, or equivalently replace some of the features; and these modifications or replacements do not depart from the scope of the corresponding solutions from the scope of the solutions of the various embodiments of the present application.

## Claims

1. A storage device, comprising:
a storage member, having a storage space;
a gas supply member, being in fluid communication with the storage space to adjust a parameter of gas in the storage space; and
a drive member, suitable for driving the storage member to operate based on the parameter of gas in the storage space, to provide fluid communication between the storage space and outside.

2. The storage device of claim 1, further comprising a cover body, covered on the storage member to seal the storage space, and the drive member is mounted at the cover body.

3. The storage device of claim 2, wherein the gas supply member comprises:
a mount housing, mounted at the cover body;
a first water box, mounted at the mount housing and communicating with the storage space through a pipeline; and
a gas production member, provided at the first water box.

4. The storage device of claim 3, wherein the gas supply member further comprises a seal cover movably mounted at the first water box, and a first seal is provided between the seal cover and the first water box.

5. The storage device of claim 3, wherein the first water box is provided with an exhaust port, the storage member is provided with an air inlet, and two ends of the pipeline are respectively connected to the exhaust port and the air inlet.

6. The storage device of claim 2, wherein the gas supply member comprises:
an electrolytic chamber, mounted at the cover body and being in fluid communication with the storage space; and
an electrolytic member, mounted at the electrolytic chamber.

7. The storage device of any of claims 2 to 6, wherein the drive member comprises:
a mount seat, mounted at the cover body; and
a push rod, wherein a first end of the push rod is stretchably mounted at the mount seat, and a second end of the push rod is suitable for driving the storage member to operate.

8. The storage device of claim 7, further comprising a first detection member, suitable for detecting the parameter of gas, wherein at least one of the storage member and the cover body is mounted with the first detection member, and the push rod is suitable for operating based on a first detection signal of the first detection member.

9. The storage device of any of claims 2 to 6, further comprising a humidity control apparatus, wherein the humidity control apparatus comprises:
a second water box, mounted at the cover body and provided with a through hole communicating with the storage space; and
an atomization member, mounted at the through hole.

10. The storage device of claim 9, further comprising a second detection member suitable for detecting humidity of air in the storage space, wherein at least one of the storage member and the cover body is mounted with the second detection member, and the atomization member starts and stops based on a second detection signal of the second detection member.

11. The storage device of any of claims 2 to 6, wherein the cover body is provided with a control panel, and the control panel is electrically connected to at least one of the gas supply member and the drive member.

12. The storage device of any of claims 1 to 6, further comprising an exhaust valve, wherein the exhaust valve is mounted at the storage member and is suitable for communicating the storage space with the outside or separating the storage space from the outside.

13. The storage device of any of claims 1 to 6, wherein the storage member is switchable between a push-back position and a pull-out position relative to a mount position of the storage member;
the storage device further comprises:
an exhaust valve, mounted at one of the storage member and the mount position; and
a match member, mounted at another one of the storage member and mount position;
the match member corresponds to the exhaust valve and is suitable for driving the exhaust valve to operate the exhaust valve to communicate the storage space with the outside in the push-back position; and the match member separates from the exhaust valve in the pull-out position.

14. A storage cabinet comprising a cabinet body, wherein the cabinet body is provided with a storage device of any of claims 1 to 13.

15. The storage cabinet of claim 14, wherein a refrigeration compartment is provided inside the cabinet body, and the storage device is provided in the refrigeration compartment in a drawable manner.

16. A storage method based on a storage device of any of claims 1 to 13, comprising:
obtaining an actual parameter of gas in a storage space; and
adjusting an operation state of at least one of a gas supply member and a drive member in response to a comparison result between the actual parameter of gas and a given parameter of gas.

17. The storage method of claim 16, wherein the actual parameter of gas comprises an actual pressure of gas, and the given parameter of gas comprises a given pressure of gas;
adjusting the operation state of at least one of the gas supply member and the drive member in response to the comparison result between the actual parameter of gas and the given parameter of gas comprises:
controlling the drive member to operate to communicate the storage space with outside in accordance with a determination that the actual pressure of gas is greater than the given pressure of gas.

18. The storage method of claim 17, wherein after controlling the drive member to operate to communicate the storage space with the outside in accordance with the determination that the actual pressure of gas is greater than the given pressure of gas, the method comprises:
controlling the drive member to reset in accordance with a determination that the actual pressure of gas reaches the given pressure of gas.

19. The storage method of any of claims 16 to 18, wherein the actual parameter of gas comprises an actual concentration of oxygen, and the given parameter of gas comprises a given concentration of oxygen;
adjusting the operation state of at least one of the gas supply member and the drive member in response to the comparison result between the actual parameter of gas and the given parameter of gas comprises:
controlling the gas supply member to start and/or controlling the drive member to operate, to communicate the storage space with the outside in accordance with a determination that the actual concentration of oxygen is lower than the given concentration of oxygen.

20. The storage method of any of claims 16 to 18, wherein the actual parameter of gas comprises actual humidity of air, the given parameter of gas comprises given humidity of air, and the storage device comprises a humidity control apparatus;
the storage method further comprises:
controlling the humidity control apparatus to start in accordance with a determination that the actual humidity of air is lower than the given humidity of air.

21. A storage apparatus based on a storage device of any of claims 1 to 13, comprising:
an obtain module, used for obtaining an actual parameter of gas in a storage space; and
a control module, used for adjusting an operation state of at least one of a gas supply member and a drive member in response to a comparison result between the actual parameter of gas and a given parameter of gas.

22. An electronic device comprising a memory, a processor, and a computer program stored on the memory and capable of running on the processor, wherein the processor, when executes the program, performs steps of a storage method of any of claims 16 to 20.

23. A non-transitory computer-readable storage medium on which a computer program is stored, wherein the computer program, when executed by a processor, performs steps of a storage method of any of claims 16 to 20.

24. A computer program product comprising a computer program, wherein the computer program, when executed by a processor, performs steps of a storage method of any one of claims 16 to 20.
